# EUROPEAN PATENT SPECIFICATION

(11) **EP 3 899 635 B1**
(45) Date of publication and mention of the grant of the patent: **23.04.2025**
(21) Application number: 19705721.9
(22) Date of filing: 11.02.2019
(51) Int. Cl.: G02B 26/08

(54) **DEVICE AND METHOD FOR SENSING MAGNETIC FIELD DISTRIBUTION**
VORRICHTUNG UND VERFAHREN ZUM MESSEN DER MAGNETFELDVERTEILUNG
DISPOSITIF ET PROCÉDÉ DE DÉTECTION DE LA DISTRIBUTION DE CHAMP MAGNÉTIQUE

(43) Date of publication of application: 27.10.2021
(73) Proprietor: Huawei Technologies Co., Ltd., Longgang District, Shenzhen, Guangdong 518129 (CN); Fraunhofer-Gesellschaft zur Förderung der angewandten Forschung e.V., 80686 München (DE)
(72) Inventor: GU-STOPPEL, Shanshan, 25524 Itzehoe (DE); LISEC, Thomas, 25524 Itzehoe (DE); LOFINK, Fabian, 25524 Itzehoe (DE); NIEKIEL, Florian, 25524 Itzehoe (DE)
(74) Representative: Roth, Sebastian
(86) International application number: PCT/EP2019/053319
(87) International publication number: WO 2020/164684

(56) References cited:
- JP-A- 2004 191 918
- JP-A- 2012 202 741
- US-A- 5 767 666
- US-A1- 2014 132 091
- AOYAGI I ET AL: "2D MEMS scanner with a rotation-angle detector for a time-of-flight image sensor", 2013 INTERNATIONAL CONFERENCE ON OPTICAL MEMS AND NANOPHOTONICS (OMN), IEEE, 18 August 2013 (2013-08-18), pages 99 - 100, XP032524897, ISSN: 2160-5033, ISBN: 978-1-4577-1511-2, [retrieved on 20131108], DOI: 10.1109/OMN.2013.6659078

## Description

### TECHNICAL FIELD

The present disclosure relates generally to the field of Micro-Electro-Mechanical Systems (MEMS) devices, and more particularly to MEMS mirrors. In this technical filed, the disclosure proposes a device, particularly MEMS mirror, for precise tilting of a movable structure, e.g. mirror, by sensing changes of magnetic field distribution. This disclosure also propose a method for determining a position of a moveable structure by sensing the change of the magnetic field distribution.

### BACKGROUND

Generally, MEMS devices (also referred to as Micro-Electro-Mechanical, microelectronic and microelectromechanical systems, micro-mechatronics, etc.) are known. Conventional MEMS mirrors are of great interest for a wide range of applications such as imaging devices, optical networks, adaptive light sources, Light Detection and Ranging (LIDAR) applications, material processing, etc. In such MEMS mirrors, it is necessary to monitor the position (e.g., the tilt angle) of the beam steering element (mirror) with high precision. For example, in optical network applications of the MEMS, it is required to control the tilt angle with the highest accuracy. However, in the case of larger angles, as well as for the case of closely packaged MEMS mirror arrays, a robust and low cost technology for precise tilting and monitoring the tilt is not available yet.

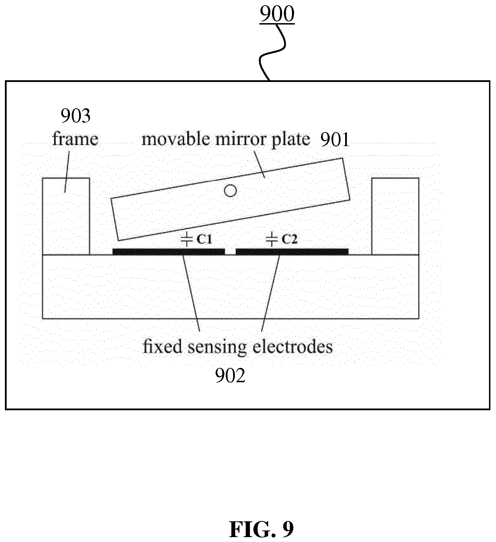

Conventionally, capacitive position sensing is a widely used integrated technique. FIG. 9 schematically illustrates a cross-section through a conventional MEMS mirror device 900 utilizing parallel-plate capacitive sensing with fixed electrodes 902 beneath the movable mirror 901 included in a fixed frame 903.

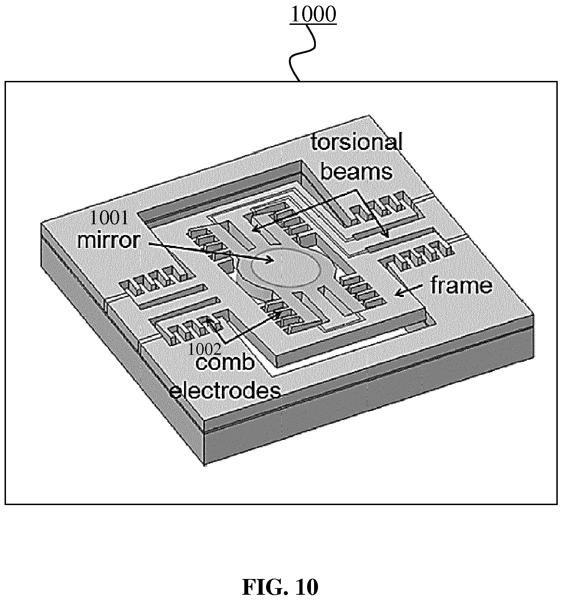

FIG. 10 schematically illustrates a 3D view of a conventional MEMS mirror device 1000 including comb-type capacitive electrodes 1002 for both of the actuation and the sensing being arranged in a plane with the mirror 1001.

Typically, the conventional MEMS mirrors are based on either planar sensing electrodes located beneath the movable mirror (e.g., device 900 in FIG. 9) or the comb-type electrodes arranged in the plane with the mirror (e.g., device 1000 in FIG. 10).

The main advantages of the capacitive sensing are the easy integration of the required electrodes into MEMS processes, and the matureness of the readout electronics that allow resolutions down to the femtofarad (fF) range. However, the conventional MEMS mirrors have the disadvantage that they are not suitable for large tilt angles. For example, in the case of the parallel-plate configuration, a large tilt angle requires a correspondingly large gap between the movable mirror plate and the sensing electrodes. The measured capacitance is inversely proportional to this spacing. Moreover, in order to ensure a good sensitivity in the relative readout capacitance of C1/C2, and despite the large gap size, the very large electrode areas are needed. Consequently, the large electrodes areas may increase the overall size of the device.

Conventionally, the comb-type electrodes are applied since they can be relatively compact, e.g., due to the constant small gap between the opposite electrodes. Furthermore, for the low tilt angles a good sensitivity may be achieved. For instance, for the tilt angles, a reproducibility below 0.1° is reported for a range of ±10°. For the larger tilt angles, the sensitivity may significantly decrease due to the reduced overlap of the electrodes.

Alternatively, some conventional devices are known that are using the piezoresistive sensing. In such devices, the piezoresistors may be integrated into springs that support the mirror plate. This technologically is by far more complex as the fabrication of electrodes for the capacitive sensing. Another disadvantage is the larger device size. However, a good tilt angle resolution may be obtained.

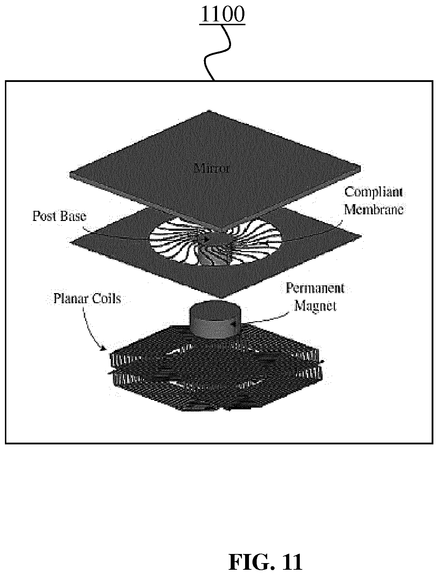

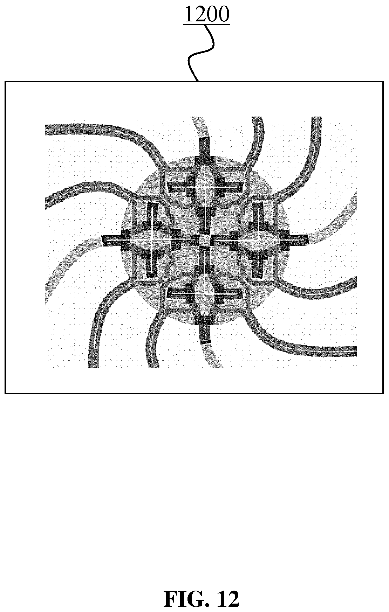

FIG. 11 schematically illustrates a conventional MEMS mirror 1100 based on the electromagnetic actuation, and, FIG. 12 schematically illustrates a conventional MEMS mirror 1200 based on the piezoresistor placement.

In the conventional MEMS mirror 1100 illustrated in FIG. 11, four wheatstone bridges with sixteen piezoresistors are required, in total, in order to ensure a full in-plane control with the high sensitivity.

Moreover, a minimum detectable angle of approximately 0.002° (30 µrad) may be measured. The reproducibility of the tilt angle may be, for example, as good as 0.001° within a 100 mrad range (about 6°). This rather small tilt angle may be due to the particular applied actuation mechanism. In addition, a significantly larger ranges may be obtained with the comparable high resolution using piezoelectric sensing.

In addition, apart from the described techniques, the tilt angle may be monitored using an external Position Sensitive Device (PSD), for example, photodiode-based. Furthermore, for applications that require large mirror arrays, using an external PSD is typically very expensive. In order to overcome this restrain, an integrated on-chip optical PSD may been used. Alternatively, the sound produced by the MEMS mirror may be utilized for the position sensing by applying a microphone as the PSD.

Conventional devices (on the scale of mm to m) are known that use magnetic position sensing. For example, the magnetic principles are known to be applied for e.g., various actuators, MEMS resonators, and tactile sensors, etc. Magnetic position sensing provides several advantages, for example, it is precise, cheaper than the optical sensing, and is insensitive to contaminations. However, the conventional devices have several drawbacks due to, for example, the lack of suitable micro-magnets (e.g., since magnetic forces scale with the volume, larger magnets are advantageous which cannot be easily produced). The traditional sintering techniques are suitable only for larger magnets and not for the micro-magnets. The common deposition processes of semiconductor technology provide only thin layers and the volume of obtained magnets may be very low. Moreover, the integration of the micro-magnets on planar substrates is not known.

### AOYAGI I ET AL: 2013 INTERNATIONAL CONFERENCE ON OPTICAL MEMS

AND NANOPHOTONICS (OMN), IEEE, 18 August 2013 (2013-08-18), pages 99-100, discloses a 2D MEMS scanner with a rotation-angle detector for a time-of-flight image sensor.

US 2014/132091 Al discloses a MEMS device. The MEMS device applies a magnetic field to the magnetic material, and detects the magnetic field of the magnetic material.

### SUMMARY

The objective of the present invention is achieved by the solution provided in the enclosed independent claims. Advantageous implementations of the present invention are further defined in the dependent claims.

The present invention is defined by a Micro-Electro-Mechanical-System (MEMS) mirror according to independent claim 1, and a method for determining a position of a moveable mirror according to independent claim 8.

A first aspect of the invention, as defined by claim 1, provides a device, in particular a Micro-Electro-Mechanical-System, MEMS, mirror, comprising a movable structure configured to rotate around at least one axis of rotation; one cylindrical micro-magnet connected to the moveable structure;
wherein a rotation of the moveable structure around the at least one axis of rotation rotates the micro-magnet around the same axis of rotation; and a fixed structure comprising an arrangement of two or more magnetic field sensors positioned at a certain distance below the micro-magnet,
wherein the distance between the fixed structure and the micro-magnet is in the range between 5 µm to 1000 µm,
wherein the arrangement of the magnetic field sensors is configured to sense a change of a magnetic field distribution caused by a rotation of the micro-magnet.

For example, in some embodiments, the distance between the micro-magnet and the arrangement of magnetic field sensors may be between 5 µm to 1000 µm. In some embodiments, the distance between the micro-magnet and the arrangement of magnetic field sensors may be between 5 µm and 500 µm, or between 10 µm and 100 µm, etc.

The device of the first aspect may provide a magnetic sensing (e.g., for the MEMS mirrors), for example, based on a high-flux micro-magnet in combination with an arrangement of the magnetic field sensors.

The micro-magnet may have a predefined size, volume and structure. The micro-magnet is connected to the moveable structure. For example, it may be integrated in the moveable structure, it may be mechanically connected to the moveable structure, fixed to the moveable structure, etc. Moreover, the micro-magnet included in the device may produce a magnetic field. The magnetic field produced by the micro-magnet may be sensed by the arrangement of the magnetic field sensors. For example, a direction and/or a magnitude of the magnetic field distribution may be sensed depending on the amount of rotation of the movable axis around the axis of rotation.

In an implementation form of the first aspect, at least two magnetic field sensors from the arrangement of the two or more magnetic field sensors are arranged symmetrically with respect to a default position of the micro-magnet.

For example, in some embodiments, the arrangement of the magnetic field sensors may be such that the at least two magnetic field sensors may be arranged arbitrarily. For instance, the arrangement may be symmetrical with respect to the micro-magnet. The default position of the micro-magnet may be a predefined position, e.g., in which the direction of the magnetic field distribution and/or the magnitude of the magnetic field distribution is known.

In a further implementation form of the first aspect, at least two magnetic field sensors from the arrangement of the two or more magnetic field sensors are arranged in a two-dimensional array.

In a further implementation form of the first aspect, the arrangement of the two or more magnetic field sensors comprises two or more magnetic elements integrated on one circuit and/or fabricated in parallel on a substrate.

In a further implementation form of the first aspect, the circuit is fabricated by a common semiconductor process.

For example, the integrated micro-magnets may be fabricated in parallel on the wafer level.

In a further implementation form of the first aspect, the arrangement of the two or more magnetic field sensors is based on one or more of:
- A Hall sensor.
- An Anisotropic Magneto-Resistive, AMR, magnetic sensor.
- A Giant Magnetoresistance, GMR, sensor.
- A Magnetic Field-Effect Transistor, MAGFET, sensor.

For example, the magnetic field sensors may be of any known type (Hall, AMR or GMR sensors as well as the MAGFETs). In some embodiments, it may be an array of many single elements integrated on one circuit. In some embodiments, the circuit may be fabricated using a common semiconductor process such as an Atomic Layer Deposition (ALD), a Chemical Vapor Deposition (CVD), a Physical Vapor Deposition (PVD), a Plasma Enhanced Chemical Vapor Deposition (PE-CVD), etc., without limiting the invention to a specific semiconductor process. For example, all sensor elements of the arrangement may be within one plane.

In a further implementation form of the first aspect, the movable structure comprises a reflective surface configured to reflect a beam of light.

In a further implementation form of the first aspect, a determined angle of rotation of the movable structure around the at least one axis of rotation corresponds to a determined magnetic field distribution sensed by the arrangement of the two or more magnetic field sensors.

In a further implementation form of the first aspect, the micro-magnet has a length in the range between 20 µm and 700 µm.

In a further implementation form of the first aspect, the micro-magnet has a width in the range between 20 µm and 500 µm.

A second aspect of the invention provides a method for determining a position of a moveable structure
In an implementation form of the third aspect the method comprises sensing, by an arrangement of two or more magnetic field sensors of a fixed structure positioned at a certain distance (h_{mag}) below a micro-magnet connected to the moveable structure, a change of a magnetic field distribution caused by a rotation of the micro-magnet around at least one axis of rotation, wherein the cylindrical micro-magnet has an aspect ratio larger than 1:1, and wherein the distance (h_{mag}) between the fixed structure and the micro-magnet is in the range between 5 µm to 1000 µm; and
In an implementation form of the third aspect the method determines the angle of rotation of the movable structure around the at least one axis of rotation and/or the position of the moveable structure, based on the sensed change of the magnetic field distribution.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present invention will be explained in the following description of specific embodiments in relation to the enclosed drawings, in which
- FIG. 1: schematically illustrates a device, according to various embodiments of the invention.
- FIG. 2: schematically illustrates the device in a form of a Micro-Electro-Mechanical-System mirror, according to various embodiments of the invention.
- FIG. 3: schematically illustrates the device in the form of MEMS mirror for sensing magnetic field distribution by an arrangement of two Hall sensors, according to various embodiments of the invention.
- FIG. 4: schematically illustrates the device in the form of MEMS mirror with two axes of rotation, according to various embodiments of the invention.
- FIG. 5: illustrates simulated magnetic flux density as a function of the distance from the lower edge of the micro-magnet of the device, according to various embodiments of the invention.
- FIG. 6a: schematically illustrate the micro mirror device in the non-titled ground state, and FIG. 6b illustrate the magnetic field distribution for the micro mirror device in the non-titled ground state, according to various embodiments of the invention.
- FIG. 7a: schematically illustrate the micro mirror device with a tilt angle of 15°, and FIG. 7b illustrate the magnetic field distribution for the micro mirror device with a tilt angle of 15°, according to various embodiments of the invention.
- FIG. 8: schematically illustrates a method for determining a position of a moveable structure, according to various embodiments of the invention.
- FIG. 9: schematically illustrates a conventional mirror device based on the parallel-plate capacitive sensing, according to the prior art.
- FIG. 10: schematically illustrates a 3D view of a conventional MEMS mirror device including comb-type capacitive electrodes, according to the prior art.
- FIG. 11: schematically illustrates a conventional MEMS mirror based on the electromagnetic actuation, according to the prior art.
- FIG. 12: schematically illustrates a conventional MEMS mirror based on the piezoresistor placement, according to the prior art.

### DETAILED DESCRIPTION OF EMBODIMENTS

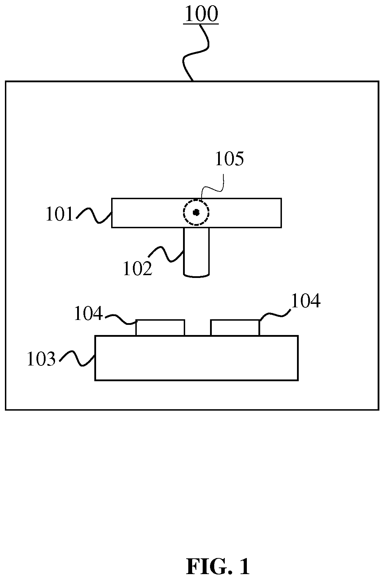

FIG. 1 schematically illustrates a device 100 according to various embodiments of the invention.

The device 100 is exemplary based on a MEMS mirror. The device 100 comprises a movable structure 101 configured to rotate around at least one axis of rotation 105 indicated by the dotted line, exemplarily into the plane.

The device 100 further comprises a micro-magnet 102 connected to the moveable structure 101; wherein a rotation of the moveable structure 101 around the at least one axis of rotation 105 rotates the micro-magnet 102 around the same axis of rotation 105.

The device 100 further comprises a fixed structure 103 comprising an arrangement of two or more magnetic field sensors 104 positioned at a certain distance (h_{mag}) below the micro-magnet 102, wherein the arrangement of the magnetic field sensors 104 is configured to sense a change of a magnetic field distribution caused by a rotation of the micro-magnet 102.

The device may be a MEMS mirror, a micro mirror device, etc. In some embodiments, the micro-magnet may be integrated into the moveable structure. The micro-magnet may produce a magnetic field. Moreover, when the moveable structure (e.g., the integrated micro-magnet to the moveable structure) rotates, the magnetic field distribution may change. The change of the magnetic field distribution may be sensed by the arrangement of the magnetic field sensors, and the position of the moveable structure may be determined.

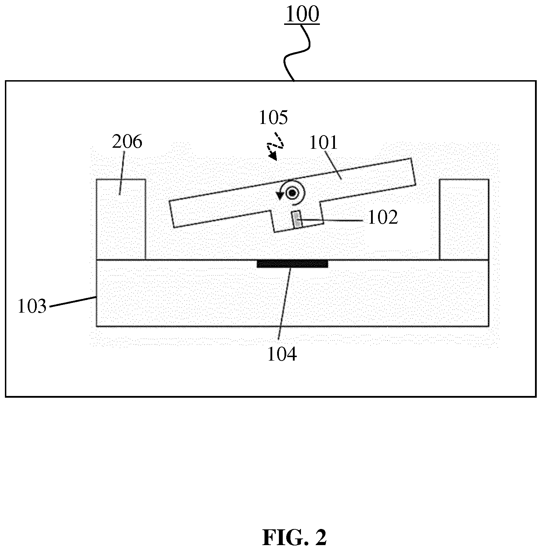

FIG. 2 schematically illustrates a device 100 in the form of a MEMS mirror according to various embodiments of the invention.

The schematic cross-section through the micro mirror 100 illustrates one micro-magnet 102 and an arrangement of the magnetic field sensors 104, which may be used for magnetic position sensing, determining the position of the moveable structure, adjusting the tilt angle, etc.

In the device 100 of the FIG. 2, the micro-magnet 102 is integrated at the lower side of the movable structure 101 of the micro mirror device 100. Moreover, due to the rigid connection of the micro-magnet 102 to the movable mirror 101, the micro-magnet 102 rotates around the same axis as the moveable mirror, e.g., during the operation and/or the rotation, etc. The different component of the device are included in a frame 206.

The moveable structure 101 of the device 100 comprises a reflective surface (e.g., a moveable mirror plate) configured to reflect a beam of light.

In addition, the change in the position and/or the orientation of the moveable structure 101 (e.g., the mirror plate) may result in a change in the magnetic field seen by the arrangement of the magnetic field sensors 104, for example, the arrangement of the magnetic field sensors 104 may sense the change of the magnetic field distribution caused by the rotation of the micro-magnet 102.

Furthermore, the magnetic field detected by the arrangement of magnetic field sensors 104 may be utilized, and the position and/or the orientation of the micro-magnet and/or the mirror plate may be tracked.

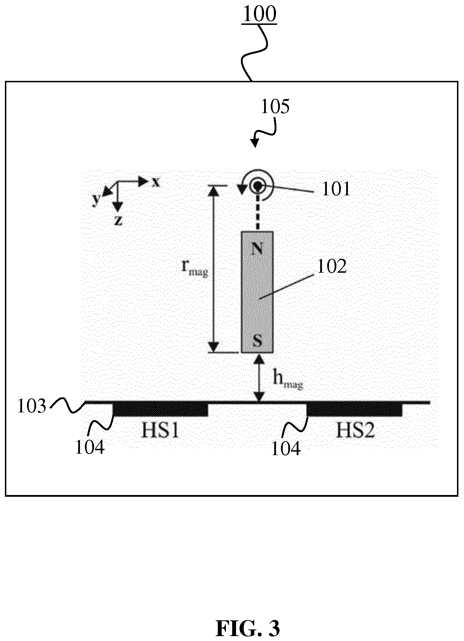

FIG. 3 schematically illustrates the device 100 in the form of MEMS mirror for sensing magnetic field distribution by an arrangement of two Hall sensors, according to various embodiments of the invention.

The exemplary realization of the proposed sensing solution is illustrated in FIG. 3 in which two Hall sensors HS1 and HS2 are utilized in the arrangement of the magnetic field sensors 104. The Hall sensors are located in the sensor plane at a distance h_{mag} from the lower end of the micro-magnet 102 in the non-deflected state. Moreover, the distance between the lower end of the micro-magnet 102 and the rotation center of the movable mirror plate 101 (e.g., the moveable structure) is r_{mag}.

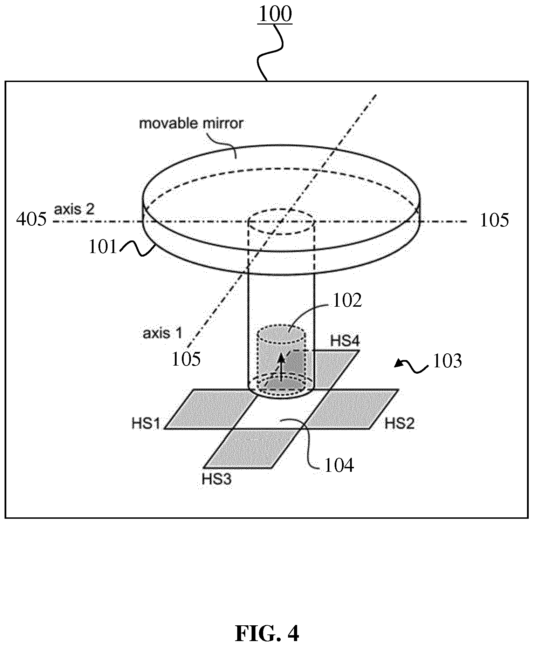

FIG. 4 schematically illustrates the device 100 in the form of MEMS mirror with two axes of rotation 105, according to various embodiments of the invention. The device 100 includes a single micro-magnet 102 integrated into the movable structure 101 and four Hall sensors beneath 104

The arrangement of the magnetic field sensors (e.g., as it is illustrated in the embodiment of the FIG. 3) may be extended, in order to monitor the tilt angle of, for example, the micro-magnet 102 and/or the moveable structure 101 and/or the moveable mirror) included in the micro mirror device 100 in the two independent axis 105.

In addition, two Hall sensors of HS3 and HS4, are placed in the arrangement of the magnetic field sensors. The two Hall sensors HS3 and HS4 are further rotated by 90° with respect to the other two sensors (e.g., HS1 and HS2) within the sensor plane, in order to enable measuring in the second axis 405.

In the following, in order to estimate the performance of the proposed sensing solution (i.e., the change of the magnetic field distribution caused by the rotation of the micro-magnet), the magnetic field of a cylindrical micro-magnet having a diameter of 50 µm and with different lengths are simulated, numerically, e.g., based on the arrangement and/or the configuration of the device 100 illustrated in FIG. 3, without limiting the invention to a specific configuration and/or a specific arrangement of the magnetic field sensors, the micro-magnet, etc.

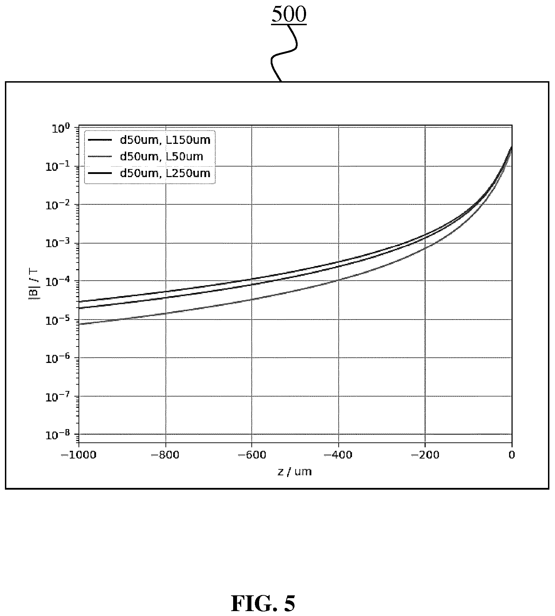

In FIG. 5 the normalized magnetic flux along the axis of the cylindrical shape (which is parallel to the magnetization direction) is plotted starting at the lower end of the micro-magnet. The micro-magnet 102 is considered to be based on an NdFeB magnet, without limiting the invention to a specific micro-magnets.

FIG. 5 illustrates the simulated normed magnetic flux density (B) as a function of the distance from the lower edge of the micro-magnet with 50 µm diameter and with various length (L) being fabricated from the NdFeB powder using agglomeration by Atomic Layer Deposition (ALD).

As can be derived from FIG. 5, even the smallest powder-based NdFeB magnets generate a considerable magnetic field over tens of microns distance. The generated magnetic field is sufficient for the detection with the Hall sensors.

In some embodiments, the volume shaped micro-magnets may be used. Moreover, the effects of using volume shaped micro-magnets may also be derived. For example, in the illustration of the FIG. 5, it may be derived that the magnetic field strength increases significantly changing the aspect ratio of the cylindrical micro-magnet from 1:1 to 3:1. A further increase may be observed for an aspect ratio of 5:1. However, the benefits may be less. In some embodiments, micro-magnets with aspect ratio of at least 3:1 may be employed for the proposed sensing solution (e.g., sensing the change of the magnetic field distribution caused by the rotation of the micro-magnet). Producing such a micro-magnets require a thickness which is not achievable by using thin film technologies.

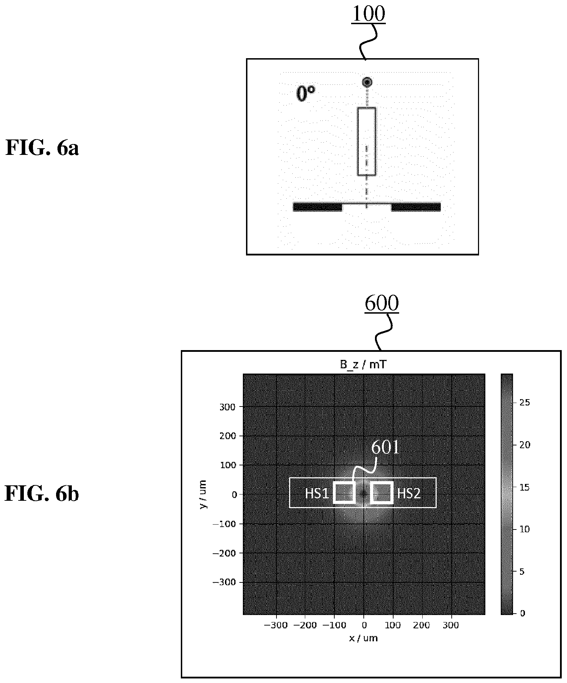

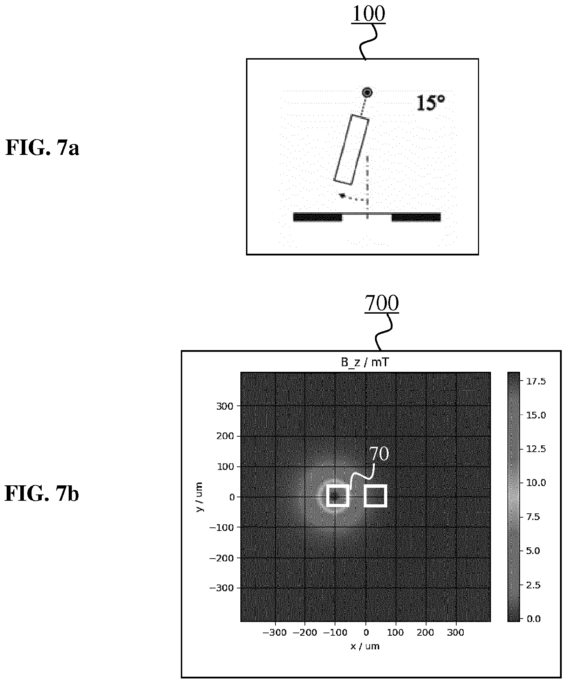

In the following, a cylindrical micro-magnet with diameter of 50 µm and an aspect ratio of 5:1 is considered, as an exemplary illustration of sensing the change of the magnetic field distribution. FIGs. 6a, 6b, 7b and 7b illustrate the magnetic field distribution in the sensing plane at the distance of h_{mag}= 50 µm for different tilt angles.

FIG. 6a schematically illustrate the micro mirror device in the non-titled ground state (e.g., the idle state), according to various embodiments of the invention. FIG. 6b illustrate the magnetic field distribution 600 for the micro mirror device 100 in the non-titled ground state, according to various embodiments of the invention.

The z-component of the magnetic flux (e.g., the magnetic field distribution) is exemplarily illustrated in conjunction with the aforementioned Hall sensors. The method for sensing the change of the magnetic field distribution also works for other magnetic field sensors, which may be sensitive to the x- and/or the y-component of the magnetic flux.

As can be derived from the FIG. 6b, the micro-magnet yields a strongly focused magnetic flux in the sensing plane with a peak values of up to 30 mT. The magnetic field is concentrated within a spot of about 100 µm. In some embodiments, Hall sensors with a geometrical extend of approximately 100 µm may be used. Moreover, the two Hall sensors conceived for this exemplary illustration of the sensing concept are placed 100 µm apart from each other and are indicated by 601 (white lines) in FIG. 6b. In the non-titled ground state of the micro mirror device (illustrated in FIG. 6a and FIG. 6b), both sensors see a low magnetic flux with equal magnitudes, in the z direction.

FIG. 7a schematically illustrate the micro mirror device with a tilt angle of 15°, according to various embodiments of the invention. FIG. 7b illustrate the magnetic field distribution 700 for the micro mirror device with a tilt angle of 15°, according to various embodiments of the invention.

For a center of rotation positioned at a distance of r_{mag} = 400 µm from the lower end of the micro-magnet, a rotation of 15° of the micro mirror device (and thus the micro-magnet) results in a lateral shift of 107 µm at the lower end of the micro-magnet. This rotation may strongly alter the magnetic field distribution in the sensing plane, as depicted in FIG. 7b. The spot of concentrated magnetic flux in z direction may now coincide with the sensing area of HS1, which may lead to a strong asymmetry distribution, in the signals measured by the two sensors. The decrease in the peak values of the z-component of the magnetic flux may be, for example, due to the increase in the distance to the sensing plane and the relative tilt (e.g., angle) of the micro-magnet caused by rotation.

In some embodiments, the position of the micro-magnet may be measured from the signals of the Hall sensor in a differential readout scheme. For example, the utilization of a differential signal may strongly reduce the impact of the environmental influences, such as the magnetic stray fields or the temperature fluctuations on the accuracy of the sensing the change of the magnetic field distribution and/or determining the position of the moving structure.

In some embodiments, the achievable resolution of sensing the change of the magnetic field distribution and/or determining the position of the moving structure may depends on the performance of the employed magnetic field sensors, the geometry of the utilized micro-magnet, the geometric parameters e.g., the r_{mag} and h_{mag}.

In some embodiments, different magnetic field sensors, e.g., the AMR and the GMR sensors may be used. Moreover, the sensor elements may be integrated on the chip-level.

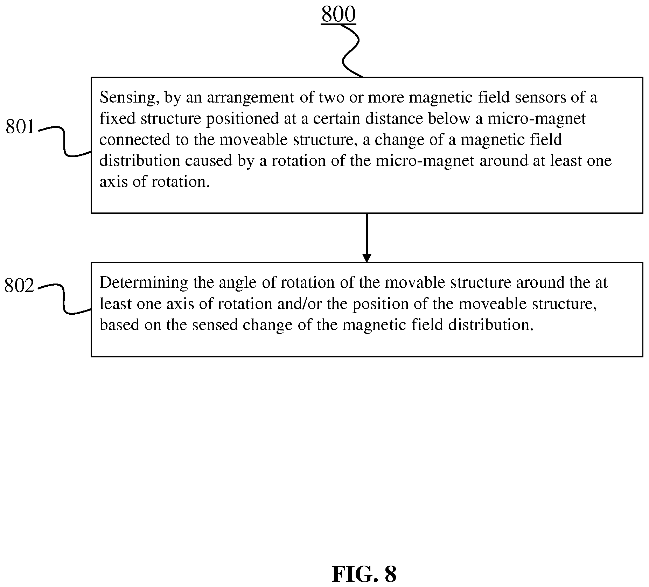

FIG. 8 shows a method 800 according to an embodiment of the invention for determining a position of a moveable structure 101. The method 800 may be carried out by using and/or by means of the device 100, as it described above.

The method 800 comprises a step 801 of sensing, by an arrangement of two or more magnetic field sensors 104 of a fixed structure 103 positioned at a certain distance (h_{mag}) below a micro-magnet 102 connected to the moveable structure 101, a change of a magnetic field distribution caused by a rotation of the micro-magnet 102 around at least one axis of rotation 105.

The method 800 further comprises a step 802 of determining the angle of rotation of the movable structure 101 around the at least one axis of rotation 105 and/or the position of the moveable structure 101, based on the sensed change of the magnetic field distribution.

Embodiments of the present invention have been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Device (100), in particular a Micro-Electro-Mechanical-System, MEMS, mirror, comprising:
a movable structure (101) configured to rotate around at least one axis of rotation (105);
one micro-magnet (102) connected to the moveable structure (101), wherein the micro-magnet (102) is cylindrical and has an aspect ratio larger than 1:1;
wherein a rotation of the moveable structure (101) around the at least one axis of rotation (105) rotates the micro-magnet (102) around the same axis of rotation (105); and
a fixed structure (103) comprising an arrangement of two or more magnetic field sensors (104) positioned at a certain distance (h_{mag}) below the micro-magnet (102), wherein the distance (h_{mag}) between the fixed structure (103) and the micro-magnet (102) is in the range between 5 µm to 1000 µm,
wherein the arrangement of the magnetic field sensors (104) is configured to sense a change of a magnetic field distribution caused by a rotation of the micro-magnet (102).

2. Device (100) according to claim 1, wherein
at least two magnetic field sensors from the arrangement of the two or more magnetic field sensors (104) are arranged symmetrically with respect to a default position of the micro-magnet (101).

3. Device (100) according to claim 1 or 2, wherein
at least two magnetic field sensors from the arrangement of the two or more magnetic field sensors (104) are arranged in a two-dimensional array.

4. Device (100) according to any one of claims 1 to 3, wherein
the arrangement of the two or more magnetic field sensors comprises two or more magnetic elements (104) integrated on one circuit and/or fabricated in parallel on a substrate.

5. Device (100) according to any one of claims 1 to 4, wherein
the arrangement of the two or more magnetic field sensors (104) is based on one or more of:
- a Hall sensor,
- an Anisotropic Magneto-Resistive, AMR, magnetic sensor,
- a Giant Magnetoresistance, GMR, sensor,
- a Magnetic Field-Effect Transistor, MAGFET, sensor.

6. Device (100) according to any one of claims 1 to 5, wherein
the movable structure (101) comprises a reflective surface configured to reflect a beam of light.

7. Device (100) according to any one of claims 1 to 6, wherein
a determined angle of rotation of the movable structure (101) around the at least one axis of rotation (105) corresponds to a determined magnetic field distribution sensed by the arrangement of the two or more magnetic field sensors (104).

8. Method (800) for determining a position of a moveable structure (101), the method (800) comprising:
sensing (801), by an arrangement of two or more magnetic field sensors (104) of a fixed structure (103) positioned at a certain distance (h_{mag}) below a micro-magnet (102) connected to the moveable structure (101), a change of a magnetic field distribution caused by a rotation of the micro-magnet (102) around at least one axis of rotation (105), wherein the micro-magnet (102) is cylindrical and has an aspect ratio larger than 1:1; and wherein the distance (h_{mag}) between the fixed structure (103) and the micro-magnet (102) is in the range between 5 µm to 1000 µm; and
determining (802) the angle of rotation of the movable structure (101) around the at least one axis of rotation (105) and/or the position of the moveable structure (101), based on the sensed change of the magnetic field distribution.

## Patentansprüche

1. Vorrichtung (100), insbesondere ein Spiegel des mikroelektronisch-mechanischen Systems, MEMS-Spiegel, umfassend:
eine bewegbare Struktur (101), die dazu konfiguriert ist, sich um mindestens eine Drehachse (105) zu drehen;
einen Mikromagneten (102), der mit der bewegbaren Struktur (101) verbunden ist, wobei der Mikromagnet (102) zylindrisch ist und ein Seitenverhältnis von größer als 1:1 aufweist;
wobei eine Drehung der bewegbaren Struktur (101) um die mindestens eine Drehachse (105) den Mikromagneten (102) um dieselbe Drehachse (105) herum dreht; und
eine feste Struktur (103), die eine Anordnung aus zwei oder mehr Magnetfeldsensoren (104) umfasst, die in einem gewissen Abstand (h_{mag}) unter dem Mikromagneten (102) positioniert sind, wobei der Abstand (h_{mag}) zwischen der festen Struktur (103) und dem Mikromagneten (102) in dem Bereich zwischen 5 µm und 1000 µm liegt,
wobei die Anordnung der Magnetfeldsensoren (104) dazu konfiguriert ist, eine durch eine Drehung des Mikromagneten (102) verursachte Änderung einer Magnetfeldverteilung zu messen.

2. Vorrichtung (100) nach Anspruch 1, wobei
mindestens zwei Magnetfeldsensoren aus der Anordnung der zwei oder mehr Magnetfeldsensoren (104) symmetrisch in Bezug auf eine Standardposition des Mikromagneten (101) angeordnet sind.

3. Vorrichtung (100) nach Anspruch 1 oder 2, wobei
mindestens zwei Magnetfeldsensoren aus der Anordnung der zwei oder mehr Magnetfeldsensoren (104) in einem zweidimensionalen Array angeordnet sind.

4. Vorrichtung (100) nach einem der Ansprüche 1 bis 3, wobei
die Anordnung der zwei oder mehr Magnetfeldsensoren zwei oder mehr Magnetelemente (104) umfasst, die auf einem Schaltkreis integriert und/oder parallel auf einem Substrat hergestellt sind.

5. Vorrichtung (100) nach einem der Ansprüche 1 bis 4, wobei die Anordnung der zwei oder mehr Magnetfeldsensoren (104) auf einem oder mehreren der folgenden Punkte basiert:
- einem Hall-Sensor,
- einem anisotropen magnetoresistiven Magnetsensor, AMR-Magnetsensor,
- einem Riesenmagnetowiderstandssensor, GMR-Sensor,
- einem Sensor mit magnetischem Feldeffekttransistor, MAGFET-Sensor.

6. Vorrichtung (100) nach einem der Ansprüche 1 bis 5, wobei die bewegbare Struktur (101) eine reflektierende Oberfläche umfasst, die dazu konfiguriert ist, einen Lichtstrahl zu reflektieren.

7. Vorrichtung (100) nach einem der Ansprüche 1 bis 6, wobei ein bestimmter Drehwinkel der bewegbaren Struktur (101) um die mindestens eine Drehachse (105) herum einer bestimmten Magnetfeldverteilung entspricht, die durch die Anordnung der zwei oder mehr Magnetfeldsensoren (104) gemessen wird.

8. Verfahren (800) zum Bestimmen einer Position einer bewegbaren Struktur (101), wobei das Verfahren (800) Folgendes umfasst:
Messen (801) einer Änderung einer Magnetfeldverteilung, die durch eine Drehung des Mikromagneten (102) um mindestens eine Drehachse (105) herum verursacht wird, durch eine Anordnung von zwei oder mehr Magnetfeldsensoren (104) einer festen Struktur (103), die in einem gewissen Abstand (h_{mag}) unter einem mit der bewegbaren Struktur (101) verbundenen Mikromagneten (102) positioniert ist, wobei der Mikromagnet (102) zylindrisch ist und ein Seitenverhältnis von größer als 1:1 aufweist; und wobei der Abstand (h_{mag}) zwischen der festen Struktur (103) und dem Mikromagneten (102) in dem Bereich zwischen 5 µm und 1000 µm liegt; und
Bestimmen (802) des Drehwinkels der bewegbaren Struktur (101) um die mindestens eine Drehachse (105) und/oder die Position der bewegbaren Struktur (101) herum, basierend auf der gemessenen Änderung der Magnetfeldverteilung.

## Revendications

1. Dispositif (100), en particulier un miroir de type microsystème électromécanique, MEMS, comprenant :
une structure mobile (101) configurée pour tourner autour d'au moins un axe de rotation (105) ;
un micro-aimant (102) connecté à la structure mobile (101), dans lequel le micro-aimant (102) est cylindrique et a un rapport d'aspect supérieur à 1:1 ;
dans lequel une rotation de la structure mobile (101) autour de l'au moins un axe de rotation (105) fait tourner le micro-aimant (102) autour du même axe de rotation (105) ; et
une structure fixe (103) comprenant un agencement de deux capteurs de champ magnétique ou plus (104) positionnés à une certaine distance (h_{mag}) en dessous du micro-aimant (102), dans lequel la distance (h_{mag}) entre la structure fixe (103) et le micro-aimant (102) est comprise entre 5 µm et 1 000 µm,
dans lequel l'agencement des capteurs de champ magnétique (104) est configuré pour détecter un changement d'une distribution de champ magnétique provoqué par une rotation du micro-aimant (102).

2. Dispositif (100) selon la revendication 1, dans lequel
au moins deux capteurs de champ magnétique parmi l'agencement des deux capteurs de champ magnétique ou plus (104) sont agencés symétriquement par rapport à une position par défaut du micro-aimant (101).

3. Dispositif (100) selon la revendication 1 ou 2, dans lequel au moins deux capteurs de champ magnétique parmi l'agencement des deux capteurs de champ magnétique ou plus (104) sont agencés dans un réseau bidimensionnel.

4. Dispositif (100) selon l'une quelconque des revendications 1 à 3, dans lequel
l'agencement des deux capteurs de champ magnétique ou plus comprend deux éléments magnétiques ou plus (104) intégrés sur un circuit et/ou fabriqués en parallèle sur un substrat.

5. Dispositif (100) selon l'une quelconque des revendications 1 à 4, dans lequel
l'agencement des deux capteurs de champ magnétique ou plus (104) est basé sur un ou plusieurs des éléments suivants :
- un capteur à effet Hall,
- un capteur magnétique magnétorésistif anisotrope, AMR,
- un capteur de magnétorésistance géante, GMR,
- un capteur à transistor à effet de champ magnétique, MAGFET.

6. Dispositif (100) selon l'une quelconque des revendications 1 à 5, dans lequel
la structure mobile (101) comprend une surface réfléchissante configurée pour réfléchir un faisceau de lumière.

7. Dispositif (100) selon l'une quelconque des revendications 1 à 6, dans lequel
un angle de rotation déterminé de la structure mobile (101) autour de l'au moins un axe de rotation (105) correspond à une distribution de champ magnétique déterminée détectée par l'agencement des deux capteurs de champ magnétique ou plus (104).

8. Procédé (800) de détermination d'une position d'une structure mobile (101), le procédé (800) comprenant :
la détection (801), par un agencement de deux capteurs de champ magnétique ou plus (104) d'une structure fixe (103) positionnée à une certaine distance (h_{mag}) en dessous d'un micro-aimant (102) connecté à la structure mobile (101), d'un changement d'une distribution de champ magnétique provoqué par une rotation du micro-aimant (102) autour d'au moins un axe de rotation (105), dans lequel le micro-aimant (102) est cylindrique et a un rapport d'aspect supérieur à 1:1 ; et dans lequel la distance (h_{mag}) entre la structure fixe (103) et le micro-aimant (102) est comprise entre 5 µm et 1 000 µm ; et
la détermination (802) de l'angle de rotation de la structure mobile (101) autour de l'au moins un axe de rotation (105) et/ou de la position de la structure mobile (101), sur la base du changement détecté de la distribution de champ magnétique.
